# EUROPÄISCHE PATENTANMELDUNG

(11) **EP 4 542 374 A1**
(43) Veröffentlichungstag der Anmeldung: **23.04.2025**
(21) Anmeldenummer: 23204627.6
(22) Anmeldetag: 19.10.2023
(51) Int. Cl.: G06F 8/41, G06F 8/30, G06F 11/36

(54) **VERFAHREN ZUR VERBESSERUNG DER SPEICHERZUWEISUNG VON LLM-GENERIERTEM CODE**

(71) Anmelder: Robert Bosch GmbH, 70442 Stuttgart (DE)
(72) Erfinder: Schlund, Maximilian, 71034 Boeblingen (DE); Quante, Jochen, 71640 Ludwigsburg (DE); Woehrle, Matthias, 74321 Bietigheim-Bissingen (DE); Huth, Christopher, 74076 Heilbronn (DE); Hecking-Harbusch, Jesko, 71229 Leonberg (DE); Sierra Loaiza, Sebastian Ernesto, 04107 Leipzig (DE)

(57) **Zusammenfassung**

Ein Verfahren (10) zur Verbesserung der Speicherzuweisung von mittels eines Sprachmodells (22) generiertem Code umfasst die Schritte:
- Bereitstellen (11) eines Programmcodes (23), der mittels eines Sprachmodells (22) generiert wurde,
wenn eine neue Version des Programmcode (23) verfügbar ist,
- Erzeugen (12) einer ausführbaren Datei (43) mittels Kompilierung und Instrumentierung, wobei ein Speicher-Sanitizer (28) Instruktionen in den Programmcode und/oder die ausführbare Datei (43) einfügt,
- Ausführen (13) von Fuzzing durch einen Fuzzer (42), wobei der Fuzzer (42) Eingaben in die ausführbare Datei (43) injiziert,
- Überwachen (14) der Speicherleistung und optional von Laufzeitinformationen, des Verhaltens und/oder der Ausgabe der ausführbaren Datei (43),
- Speichern (15) von Metadaten erzeugt aus dem zugewiesenen und freigegebenen Speicher in einer Speicher-Metadaten Datenbank (44), wobei die Metadaten auf den Instruktionen basieren und während des Erzeugens (12) der ausführbaren Datei (43) und/oder während des Ausführens (13) von Fuzzing gespeichert werden;
- Ausgeben (16) des Programmcodes (23), wenn keine Verschlechterung der Speicherleistung oder andere Fehler gefunden werden.

## Beschreibung

### Stand der Technik

Zunehmend wird Programmcode mit Sprachmodellen wie Large Language Models (LLMs) erzeugt. Dies kann zum Beispiel im Rahmen einer Sprachübersetzung beziehungsweise automatisierten Programmcode Übersetzung oder einer Code Refaktorisierung geschehen.

Die Verwendung von Ansätzen zur automatisierten Codegenerierung zum Beispiel aus LLMs bringt immer Herausforderungen mit sich, so gibt es keine Garantie für die Korrektheit des Codes und keine Garantie für Leistungsverbesserungen. Es können zum Beispiel Verbesserungen für kleine Codefragmente generiert werden, aber dieser Ansatz ist für größere Codebasen nicht praktikabel.

Die Arbeit mit größeren Codebasen verschlechtert die Verwendbarkeit bestimmter statischer Methoden, z. B. der abstrakten Interpretation, da Korrektheitsgarantien nicht in angemessener Zeit berechnet werden können oder eine Annäherung erforderlich ist, die dann zu Überapproximationsfehlern führt. Außerdem sind statische Methoden kaum für die Messung der Softwareleistung, z. B. des Speicherverbrauchs, geeignet.

Sanitizer können alle Arten von Laufzeitfehlern erkennen. Hier wird der Fokus besonders auf Speicherfehler und Speicherineffizienzen gelegt, die während der Laufzeit auftreten. Gefahren liegen insbesondere bei teilinitialisierten Variablen. Die Werte von Variablen können teils erst dann bestimmt werden, wenn sie initialisiert werden, z. B. durch eine Schreiboperation. Der C++14-Standard erlaubt in einigen Fällen die unbestimmte Weitergabe von Werten, so dass Sanitizer in der Regel viele falsch positive Ergebnisse melden. Teilinitialisierte Variablen können angreifbar werden, wenn der nicht initialisierte Wert einen Bereich eines Vertrauens überschreitet.

Probleme mit nicht initialisiertem Speicher können mit Speicher-Sanitizern oft gelöst werden. Allerdings können LLM-basierte Codegeneratoren Code erzeugen, der nicht optimal, aber dennoch funktional korrekt ist (zum Beispiel erhöhte Zuweisung von Heap-Speicher). Tests, wie zum Beispiel Unit-Tests zur Überprüfung LLM-basierter Code-Optimierungen, können solche Ineffizienzen kaum oder nicht aufdecken.

### Offenbarung der Erfindung

Ein erster allgemeiner Aspekt der vorliegenden Offenbarung betrifft ein Verfahren zur Verbesserung der Speicherzuweisung von mittels eines Sprachmodells generiertem Code.

Das Verfahren umfasst
- Bereitstellen eines Programmcodes, der mittels eines Sprachmodells generiert wurde,
   wenn eine neue Version des Programmcode verfügbar ist,
- Erzeugen einer ausführbaren Datei mittels Kompilierung und Instrumentierung, wobei ein Speicher-Sanitizer Instruktionen in den Programmcode und/oder die ausführbare Datei einfügt,
- Ausführen von Fuzzing durch einen Fuzzer, wobei der Fuzzer Eingaben in die ausführbare Datei injiziert,
- Überwachen der Speicherleistung und optional von Laufzeitinformationen, des Verhaltens und/oder der Ausgabe der ausführbaren Datei,
- Speichern von Metadaten erzeugt aus dem zugewiesenen und freigegebenen Speicher in einer Speicher-Metadaten Datenbank, wobei die Metadaten auf den Instruktionen basieren und während des Erzeugens der ausführbaren Datei und/oder während des Ausführens von Fuzzing gespeichert werden;
- Ausgeben des Programmcodes, wenn keine Verschlechterung der Speicherleistung oder andere Fehler gefunden werden.

Ein zweiter allgemeiner Aspekt der vorliegenden Offenbarung betrifft ein Verfahren zum Trainieren eines Sprachmodells eingerichtet zur automatisierten Generierung von Programmcode.

Das Verfahren umfasst
- Eingeben eines Source-Codes in ein Sprachmodell und erzeugen eines Programmcodes,
- Verbessern des Programmcodes mit dem Verfahren gemäß dem ersten allgemeinen Aspekt,
- Erzeugen einer Belohnung für das Sprachmodell, wobei die Belohnung auf dem Überwachen der Speicherleistung und optional von Laufzeitinformationen, des Verhaltens und/oder der Ausgabe der ausführbaren Datei und/oder den Metadaten basiert,
- Aktualisieren von Gewichten des Sprachmodells mit dem Wert der Belohnung.

Ein dritter allgemeiner Aspekt der vorliegenden Offenbarung betrifft ein Computersystem, das dafür ausgelegt ist, das Verfahren gemäß dem ersten und/oder dem zweiten allgemeinen Aspekt (oder einer Ausführungsform davon) auszuführen.

Ein vierter allgemeiner Aspekt der vorliegenden Offenbarung betrifft ein Computerprogramm, das dafür ausgelegt ist, das Verfahren gemäß dem ersten allgemeinen Aspekt (oder einer Ausführungsform davon) auszuführen.

Ein fünfter allgemeiner Aspekt der vorliegenden Offenbarung betrifft ein computerlesbares Medium oder Signal, das das Computerprogramm gemäß dem vierten allgemeinen Aspekt (oder einer Ausführungsführungsform davon) speichert und/oder enthält.

Die Techniken des ersten, zweiten, dritten, vierten und fünften allgemeinen Aspekts können in manchen Situationen einen oder mehrere der folgenden Vorteile haben.

Die vorliegende Offenbarung verwendet die dynamische Softwaretestmethode Fuzzing, insbesondere Fuzzing, das mit einem Sanitizer erweitert ist. Es wird ein Speicher-Sanitizer verwendet, um das Speicherverhalten (zum Beispiel Zuweisung, Freigabe und deren Größen) sichtbar zu machen. Fuzzing wird eingesetzt, um so viele verschiedene Pfade in der zu testenden Software wie möglich abzudecken. Anhand des beobachteten Speicherverhaltens kann beurteilt werden, ob der mit LLM generierte Code leistungsfähiger geworden ist, was eine Feedbackschleife für eine bessere Eingabeaufforderung (Prompt) für neueren, mit einem LLM generierten Code ermöglicht.

Die vorliegende Offenbarung ermöglicht ein Testen von Softwares ohne bestehende Tests wie unter anderem Unit-Tests zur Prüfung, ob die erzeugten Code-Patches funktionell korrekt sind. Diese Tests messen in der Regel weder den Speicherverbrauch, noch können sie eine Verbesserung der Speicherleistung messen. Bestehende Tests schlagen höchstens dann fehl, wenn zu viel Speicher verwendet wird. Die Verwendung von LLMs zur Codegenerierung birgt immer das Risiko, dass der generierte Code unsinnigen oder schlechter funktionierenden Code enthält. Die vorliegende Offenbarung ermöglicht ein iteratives Lernen zur Verbesserung von LLM generiertem Code über mehrere Generationen.

Ein weiteres Problem für LLMs ist das Refactoring und die Optimierung von Code für verschiedene Ziele. Eine typische Zuweisung von Heap-Speicher ist dabei, den Heap-Speicher nach Abschluss aller Operationen auf die Daten freizugeben. Auf Geräten mit begrenztem Speicherplatz, z. B. loT-Geräten, könnte ein Refactoring nützlich sein, um Heap-Speicher zwischen einzelnen Datenoperationen wiederzuverwenden, so dass nicht jede Variable im Speicher gehalten werden muss. Die vorliegende Offenbarung ermöglicht eine Überwachung und Verbesserung der Speicherzuweisung, um ein derartiges Refactoring zu unterstützen. Anders ausgedrückt ermöglicht die vorliegende Offenbarung, LLMgenerierten Code effektiv auf Speicherverbrauch zu testen, so dass das Sprachmodell (z. B. LLM) besseren, insbesondere speicheroptimierten, Code generieren kann.

Die vorliegende Offenbarung ermöglicht die Abdeckung als Qualitätsmaßstab für generierten Code, was wiederum die Auswahl von besser generiertem Code ermöglicht. Ein solcher Code von höherer Qualität ist dann leichter zu testen.

Die vorliegende Offenbarung ist relevant für jedes Produkt, das auf automatisierten Tests basiert, insbesondere für dynamische Testmethoden, und jedes Produkt, das Legacy-Code oder Leistungsprobleme aufweist.

Einige Begriffe werden in der vorliegenden Offenbarung in folgender Weise verwendet.

Ein "Sprachmodell" kann insbesondere ein Large Language Model (LLM), neuronales Netz, Recurrent Neural Network (RNN), ein Transformer Model oder ein Codemodell als ein auf Code spezialisiertes Sprachmodell oder auch ein ganz allgemeines Sprachmodell, das auch Code umfasst, sein. Weiterhin umfasst sind Computersprachen, Codes wie Programmcodes einer Recheneinrichtung wie einem Computer. Die Sprache des Modells kann nicht nur natürliche Sprachen, sondern auch künstliche Sprachen wie zum Beispiel Programmiersprachen beinhalten.

"Refaktorisierung" von Code (englisch: refactoring) bezeichnet in der SoftwareEntwicklung Strukturverbesserungen von Code unter Beibehaltung des beobachtbaren Programmverhaltens, d.h. der Funktionalität. Dabei sollen zum Beispiel Lesbarkeit, Verständlichkeit, Wartbarkeit und/oder Erweiterbarkeit verbessert werden, mit dem Ziel, den jeweiligen Aufwand für Fehleranalyse und/oder funktionale Erweiterungen zu senken. Typische Refaktorisierungen sind z.B. Umbenennung von Variablen in selbsterklärende Namen und/oder die Extraktion von Codeteilen in eigene Methoden. Durch das Refaktorieren wird die Qualität des Codes, mithin der Software erhöht.

Das "Testen", "Prüfen" oder "Vergleichen des Ursprung-Programmcodes und des Ziel-Programmcodes" kann umfassen: eine formale Prüfung des gleichen Verhaltens des Ursprung-Programmcodes und des Ziel-Programmcodes zum Beispiel mittels Bounded Model Checking, Tests in der Ursprungssprache, Test auf Contracts in der Ursprungssprache und/oder syntaktischen und stilistischen Tests, Fuzzing, Mutation der Eingänge des Test-Harness, Ableitung aus Contracts der Ursprungssprache und/oder der Zielsprache und/oder Ableitung aus einem Sprachmodell.

Ein "Test-Harness" bzw. Testrahmen umfasst eine Sammlung von Software und Testdaten, die zum systematischen automatisierten Testen eines Programms unter verschiedenen Umgebungsbedingungen verwendet wird. Ein Test-Harness umfasst üblicherweise eine Testausführungs-Engine, welche für die Abarbeitung der Testlogik verantwortlich ist, und ein Testdaten-Repository oder Datenbank, welches die Testskripte, Testprogramme und sonstige Testressourcen beinhaltet. Hier wird der Test-Harness automatisiert erzeugt, indem zum Beispiel differenzierende Tests zu der Datenbank hinzugefügt werden. Der Start des Tests kann mit gegebenen oder vorgefertigten Tests aus der Test-Datenbank gestartet werden. Das System kann zudem Tests automatisch generieren.

Daten können hier Software Code inklusive Testfällen und harnesses plus zusätzlichen (natürlich-sprachlichen) Beschreibungen von der Funktionsweise bzw. Gültigkeitsbereichen sein. Im Fall der Sprachübersetzung wird hier beispielhaft C als Source Sprache und Rust als Target Sprache beschrieben, es sind aber auch andere Kombinationen möglich. Die Übersetzung von C in Rust ist interessant, da Rust Features im Bereich sicherheitskritischer Systeme bietet, aber viel Legacy Code in anderen Sprachen, vor allem C vorhanden ist. Im Fall der Refaktorisierung sind Quell- und Zielsprache gleich.

"Speicher-Sanitizer" (Memory Sanitizer) ist ein Werkzeug, das die Verwendung von nicht initialisiertem Speicher erkennt. Ein Memory Sanitizer kann zusätzliche Instruktionen einfügen und/oder speichert Meta-Daten, auf denen er arbeitet. Der Memory Sanitizer kann die Verwendung von nicht initialisiertem Speicher, Speicherlecks, Speicherplatzmangel, Hängen oder Endlosschleifen und unendliche Rekursion (Stack Overflows) erkennen. Andere Sanitizer bringen z.B. noch eine Erkennung von use-after-free, Pufferüberläufen, data races, deadlocks, int/float overflows oder bitweise Verschiebungen um einen ungültigen Betrag.

"Zwischendarstellung" (intermediate representation (IR)) - im weitesten Sinne auch Zwischensprache genannt - ist die Datenstruktur oder der Code, der im Verlauf eines Übersetzungsprozesses durch einen Compiler oder eine virtuelle Maschine auf einer Abstraktionsebene zwischen der höheren Ausgangssprache und der in der Regel maschinennahen Zielsprache generiert wird. Die Zwischendarstellung kann intern von einem Compiler oder einer virtuellen Maschine verwendet werden, um den Quellcode darzustellen.

"Contracts" sind Bestandteil einer vertragsbasierten Programmierung oder eines Entwurfs gemäß Vertrag ("Design by contract"). Dies ist ein Konzept der Softwareentwicklung mit dem Ziel eines optimierten Zusammenspiels einzelner Programmmodule durch die Definition formaler Verträge zur Verwendung von Schnittstellen, die über deren statische Definition hinausgehen.

Der Begriff "Codebasis" (englisch codebase) bezeichnet die Gesamtheit der zu einem Projekt gehörenden Quelltextdateien sowie eventuell dazugehöriger Konfigurationsdateien. Die Codebasis kann auch diverse andere Dateien, welche für den Vorgang des Kompilierens benötigt werden, z. B. sogenannte Makefiles, umfassen.

"Fuzzing" oder "Fuzz-Testing" ist der automatisierte Prozess des Sendens von zufällig generierten Eingaben von einem Fuzzer an ein Ziel oder Zielprogramm und des Beobachtens der Reaktion des Ziels.

Ein "Fuzzer" oder "Fuzzing-Engine" ist ein Programm, das automatisch Eingaben generiert. Sie sind also nicht zwingend mit der zu testenden Software verbunden, und es wird auch keine Instrumentierung durchgeführt. Sie haben jedoch die Fähigkeit, Code zu instrumentieren, Testfälle zu erzeugen und zu testende Programme auszuführen. Bekannte Beispiele sind afl und libfuzzer.

Ein "Fuzz-Target" ist ein Softwareprogramm oder eine Funktion, die durch Fuzzing getestet werden soll. Ein Hauptmerkmal eines Fuzz-Ziels ist, dass es sich um eine Binärdatei, eine Bibliothek, eine Anwendungsprogrammierschnittstelle (API) oder etwas anderes handelt, das Bytes als Eingabe verarbeiten kann.

"Glue-Code", "Wrapper", "Harness" oder "Fuzz-Treiber" verbinden einen Fuzzer mit einem Fuzz-Ziel.

Ein "Fuzz Test" ist die kombinierte Version eines Fuzzers und eines Fuzz-Targets. Ein Fuzz-Target kann dann instrumentierter Code sein, an dessen Eingaben ein Fuzzer angeschlossen ist. Ein Fuzz Test ist ausführbar. Der Fuzzer kann auch mehrere laufende Fuzz-Tests starten, beobachten und stoppen (in der Regel Hunderte oder Tausende pro Sekunde), jeder mit einer etwas anderen, vom Fuzzer erzeugten Eingabe

Ein "Testfall" ist eine bestimmte Eingabe und ein bestimmter Testdurchlauf aus einem Test Harness oder einem Fuzz Test. Um die Reproduzierbarkeit zu gewährleisten, werden interessante Durchläufe (Finden neuer Codepfade oder Abstürze) gespeichert.

Eine "Instrumentierung" wird verwendet, um die Abdeckungsmetrik beobachtbar zu machen, z. B. während der Kompilierung. Instrumentierung ist das Einfügen von Anweisungen in ein Programm, um eine Rückmeldung über die Ausführung zu erhalten. Sie wird meist durch den Compiler realisiert und kann z.B. die erreichten Codeblöcke während der Ausführung beschreiben.

Coverage-guided Fuzzing verwendet Code-Coverage-Informationen als Feedback während des Fuzzings, um zu erkennen, ob eine Eingabe die Ausführung neuer Code-Pfade/Blöcke verursacht hat.

Beim "mutationsbasierten Fuzzing" werden neue Eingaben erstellt, indem eine Reihe bekannter Eingaben (Korpus) verwendet und zufällig Mutationen auf sie angewendet werden.

Beim "generationsbasierten Fuzzing" werden neue Eingaben von Grund auf neu erstellt, z. B. durch die Verwendung von Eingabemodellen oder Eingabegrammatiken.

"Mutator" ist eine Funktion, die Bytes als Eingabe nimmt und eine kleine Zufallsmutation der Eingabe ausgibt.

Ein "Korpus" (Plural: Korpora) ist ein Satz von Eingaben. Initiale Eingaben sind Seeds.

### Kurzbeschreibung der Figuren

**Fig. 1** ist ein Flussdiagramm, das die Techniken der vorliegenden Offenbarung zur Verbesserung der Speicherzuweisung illustriert.
**Fig. 2** zeigt schematisch ein System, in dem die Techniken der vorliegenden Offenbarung zur Verbesserung der Speicherzuweisung eingesetzt werden können.
**Fig. 3** zeigt schematisch einen Speicher-Sanitizer, in dem die Techniken der vorliegenden Offenbarung zur Verbesserung der Speicherzuweisung eingesetzt werden können.
**Fig. 4** zeigt schematisch ein System, in dem die Techniken der vorliegenden Offenbarung zur Verbesserung der Speicherzuweisung eingesetzt werden können.
**Fig. 5** ist ein Flussdiagramm, das die Techniken der vorliegenden Offenbarung zum Trainieren eines Sprachmodells illustriert.

### Detaillierte Beschreibung

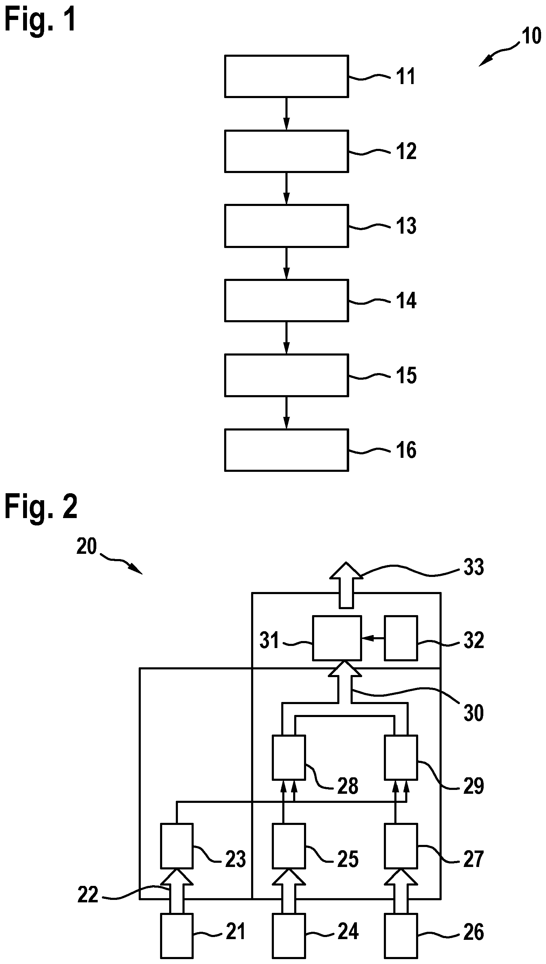

Fig. 1 ist ein Flussdiagramm, das ein Verfahren 10 zur Verifizierung statischer Warnungen von mittels eines Sprachmodells generiertem Code zeigt. Der generierte Code wird gemäß Fig. 1 in einer automatisierten Programmcode Übersetzung von einer Ursprungssprache in eine Zielsprache erzeugt. Alternativ kann der Programmcode per Code Refaktorisierung erzeugt werden.

Das in dieser Offenbarung vorgeschlagene Verfahren 10 ist zur Verbesserung der Speicherzuweisung von mittels eines Sprachmodells generiertem Code einer Software gerichtet. Die Software kann dafür ausgelegt sein, ein technisches System, insbesondere ein cyber-physisches System, insbesondere mindestens eine Recheneinheit eines Fahrzeugs, zu steuern, zu regeln und/oder zu überwachen. Insbesondere kann die Software eine embedded Software sein, die dafür ausgelegt ist, auf einem eingebetteten (d.h. z.B. aufgabenspezifischen) System ausgeführt werden.

In einem ersten Schritt erfolgt ein Bereitstellen 11 eines Programmcodes, der mittels eines Sprachmodells generiert wurde. Das Bereitstellen umfasst sowohl lediglich die Eingabe eines Programmcodes in das Verfahren beziehungsweise das System als auch die Inkludierung der Erzeugung beziehungsweise des Sprachmodells in das Verfahren beziehungsweise das System.

Wenn eine neue Version des Programmcode verfügbar ist, erfolgt ein Erzeugen 12 einer ausführbaren Datei mittels Kompilierung und Instrumentierung zum Beispiel durch einen Speicher-Sanitizer, wobei der Speicher-Sanitizer zum Beispiel bei dem Erzeugen Instruktionen in den Programmcode oder bei der Ausführung in die ausführbare Datei einfügt. Der Sanitizer fügt seine Anweisungen am besten in die Zwischendarstellung ein, um viele verschiedene Sprachen zu unterstützen. Bei einem Speicher-Sanitizer wird "shadow memory" genutzt, um die "normalen" Instruktionen mit Variablen zu initialisieren und zu befüllen sowie die Information, dass es shadow memory ist. Dann gibt es weitere Instruktionen, die das Verfahren umsetzen. Ebenso lässt sich nachverfolgen, welche Variablen mit welcher Speichergröße wann allokiert und freigegeben wurden. Damit lässt sich die Entwicklung der Speicherauslastung nachvollziehen. Es kann aber auch schon die reine Anzahl an Allokationen interessant sein.

Optional wird ein Korpus mit Eingaben für den Fuzzer bereitgestellt, der anfängliche Testfälle aus Code-Repositories des Programmcodes und/oder aus bereitgestellten Tests und Test Harnesses enthält. Der Korpus wird initial befüllt und kann während des Verfahrens weiter befüllt werden.

Es schließt sich ein Ausführen 13 von Fuzzing durch einen Fuzzer an, wobei der Fuzzer Eingaben in die ausführbare Datei injiziert. Ziel ist eine möglich gute Abdeckung der Datei beziehungsweise des Codes durch die injizierten Eingaben des Fuzzers.

Es folgt ein Überwachen 14 der Speicherleistung (wie z. B. Speichernutzung oder Speicherbelegung) und optional von Laufzeitinformationen (z. B. tatsächliche Laufzeit pro Testfall), des Verhaltens und/oder der Ausgabe der ausführbaren Datei. Bei dem Überwachen kann die dem Fuzzing unterworfene ausführbare Datei und eine Speicher-Metadaten Datenbank überwacht werden. Es kann vorgesehen sein, dass die Speicherleistung, Laufzeitinformationen, das Verhalten der ausführbaren Datei und/oder die Ausgabe der ausführbaren Datei an den Fuzzer zurückgeführt wird.

Es folgt ein Speichern 15 von Metadaten erzeugt aus dem zugewiesenen und freigegebenen Speicher in einer Speicher-Metadaten Datenbank, wobei die Metadaten auf den Instruktionen basieren und während des Erzeugens der ausführbaren Datei und/oder während des Ausführens von Fuzzing gespeichert werden. So können Metadaten aus dem zugewiesenen und freigegebenen Speicher aller verschiedenen Versionen des Programmcodes erzeugt werden und in einer Speicher-Metadaten Datenbank gespeichert werden. Dies ermöglicht eine Erhebung und einen Vergleich des Speicherverhaltens über verschiedene Versionen des Programmcodes hinweg.

Es schließt sich ein Ausgeben 16 des Programmcodes an, wenn keine Verschlechterung der Speicherleistung oder andere Fehler gefunden wurden. Es kann vorgesehen sein, dass während oder nach dem Ausführen von Fuzzing ein abnormales Beenden des Verfahrens ausgelöst wird, wenn die Speicherleistung schlechter ist als ältere Einträge aus der Speicher-Metadaten Datenbank.

Optional können parallel zu dem Fuzzing beziehungsweise den Ausführungen in dem Speicher-Sanitizer statische Tests durchgeführt werden. Statische Tests oder Prüfungen können zum Beispiel umfassen:
- Contracts werden entweder vorgegeben oder aus dem Systemumfeld extrahiert.
- Im Fall von Rust können statische Prüfungen auch durch den Compiler bereitgestellt werden, in anderen Sprachen z.B. auch durch Unter etc.
- Bounded model checking und/oder abstrakte Interpretation, realisiert in kommerziellen Tools wie z.B. Astrée oder Open-Source-tools wie z.B. CBMC.
- Automatischer Aufbau eines Bounded Model Checking Setups, das Ziel-Programmcode statisch gegen gegebene Contracts vergleicht.
- Automatischer Aufbau eines Abstract Interpretation Setups, das Ziel-Programmcode statisch gegen gegebene Contracts vergleicht.
- Automatischer Aufbau eines Bounded Model Checking Setups, das Ursprung-Programmcode und Ziel-Programmcode auf funktionale Gleichheit prüft.

Gemäß einer Ausführungsform umfasst das Verfahren weiterhin, dass der Programmcode oder Teile des Programmcodes unter Verwendung der Speicherleistung, von Laufzeitinformationen, des Verhaltens des Programmcodes und/oder der Ausgabe des Programmcodes aktualisiert wird und wobei der aktualisierte Programmcode optional als Eingabe für das Sprachmodell zurückgeführt wird.

Alternativ zu dem beschriebenen Übersetzen kann ein Refaktorieren des Programmcodes vorgesehen sein. Das Refaktorieren des Programmcodes kann Änderungen des Programmcodes umfassen. Der refaktorierte Programmcode kann ebenfalls wieder ein Code der Software, insbesondere ein Quellcode der Software sein.

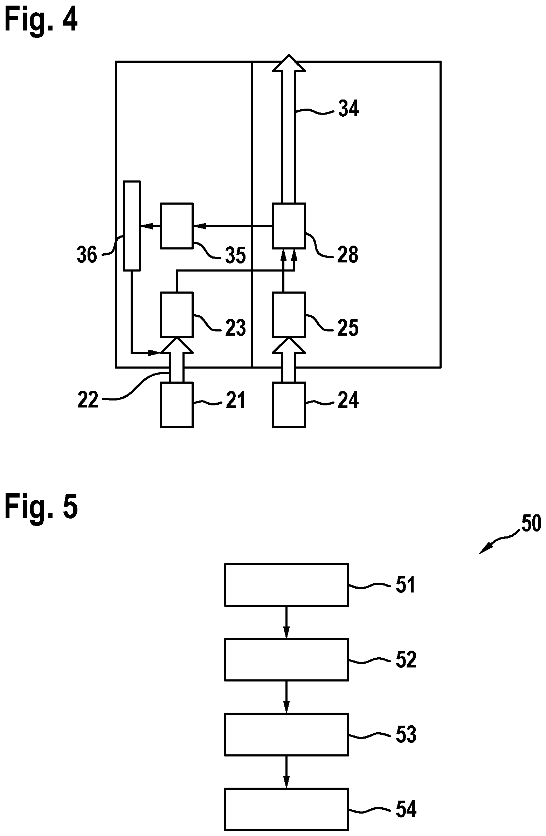

Fig. 2 zeigt schematisch ein Computersystem 20, in dem die Techniken der vorliegenden Offenbarung zur Verbesserung der Speicherzuweisung von mittels eines Sprachmodells generiertem Code eingesetzt werden können. Das Computersystem 20 ist dafür ausgelegt, das Verfahren 10 gemäß Fig. 1 und das Verfahren 50 gemäß Fig. 5 auszuführen. Das Computersystem 20 kann in Hard- und/oder Software realisiert sein. Entsprechend kann das in Figur 2 gezeigte System als Computerprogramm angesehen werden, das dazu ausgelegt ist, das Verfahren 10 gemäß Fig. 1 und das Verfahren 50 gemäß Fig. 5 auszuführen.

Ein Ursprung-Programmcode 21 in einer Ursprungssprache wie zum Beispiel C wird einem Sprachmodell 22 wie zum Beispiel einem Large Language Model (LLM) zur Übersetzung in eine Zielsprache wie zum Beispiel Rust zur Verfügung gestellt. Das Sprachmodell 22 erzeugt einen (Ziel) Programmcode 23 als Übersetzung des Ursprung-Programmcodes 21. Dieser Bereich des Computersystems 20 kann als Erzeugungsbereich bezeichnet werden.

Das Sprachmodell ist zum Beispiel ein Large Language Model (LLM) in welches per Eingabe (Prompt) Daten wie hier ein Programmcode zusammen mit einer Fragestellung wie hier einer Übersetzungs- oder Refaktorisierungsanfrage eingegeben werden.

Eine weitere Eingabe 24 in das System 20 sind Tests und optional ein Test-Harness in der Ursprungssprache. Alternativ oder optional können die Tests und/oder der Test-Harness in der Zielsprache vorliegen. Diese Eingaben werden einem Test-Harness 25 zugeführt. Der Test-Harness 25 nimmt Funktionen oder Tests in der Zielsprache auf.

Optional können statische Tests, Qualitätsbewertungen und/oder Contracts 26 einer statischen Testeinheit 27 zugeführt werden. Dort werden diese für spätere Überprüfungen des Programmcodes 23 verwaltet.

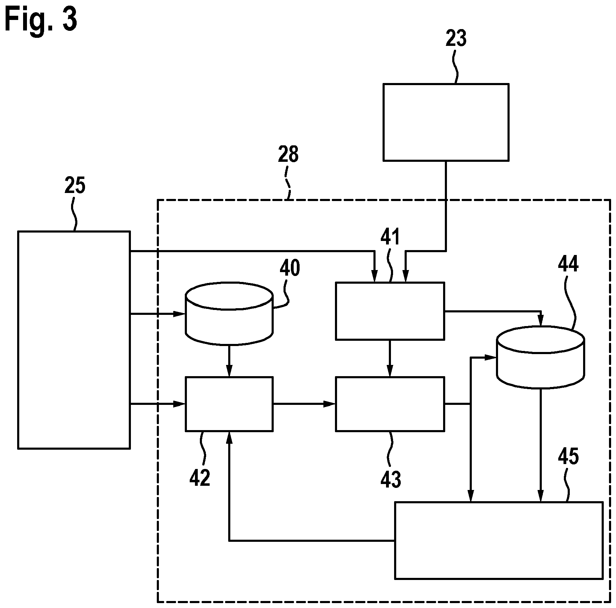

Eingänge eines Speicher-Sanitizers 28 mit Fuzzer sind mit dem Sprachmodell 22 zur Eingabe des Programmcodes 23 und mit dem Test-Harness 25 zur Eingabe von Testroutinen verbunden. In dem Speicher-Sanitizer 28 wird der Programmcode 23 basierend auf dem Test-Harness 25 mit dem Ursprung-Programmcode 21 getestet. Der Speicher-Sanitizer 28 und dessen Funktion sind im Zusammenhang mit Fig. 3 detaillierter beschrieben.

Die Generierung des Programmcodes 23 durch das Sprachmodell 22 kann wiederholt erfolgen mit geänderten Bedingungen, wie Änderung eines oder mehrerer Hyperparameter wie einem Temperatur-Parameter des Sprachmodells, Transformationen im Ursprung-Programmcode und/oder Änderungen in der Eingabe an das Sprachmodell wie zum Beispiel Änderungen in den Aufgaben oder Prompts. Zudem können Variablen im Code umbenannt werden.

Durch diese Maßnahmen wird eine Varianz erzeugt. Diese Varianz erlaubt eine Verifikation sowie eine verbesserte Qualitätsbewertung der erzeugten Übersetzungen und zudem ein Trainieren des Sprachmodells mittels einer Rückkopplung. Im Rahmen der verbesserten Qualitätsbewertung kann festgestellt werden, welche der erzeugten Programmcodes 23 besser oder schlechter geeignet sind. Der Fuzzer 28 arbeitet dann mit diesen Varianten der Programmcodes 23.

Eingänge einer Überprüfungs-Einheit 29 sind mit dem Sprachmodell 22 zur Eingabe des Programmcodes 23 und mit der statischen Testeinheit 27 zur Eingabe von statischen Tests, Qualitätsbewertungen und/oder Contracts 26 verbunden. In der Überprüfungs-Einheit 29 wird der Programmcode 21 mittels der statischen Tests, Qualitätsbewertungen und/oder Contracts 26 überprüft.

Wenn die Überprüfungen in dem Speicher-Sanitizer 28 und in der Überprüfungs-Einheit 29 erfolgreich abgeschlossen sind, wird eine Statusmeldung 30 ausgegeben, dass der Programmcode 23 in Ordnung ist. Dieser Bereich des Computersystems 20 kann als Überprüfungsbereich bezeichnet werden.

Der Ziel-Programmcode 31 kann anhand von Metriken 32 auf seine Güte bewertet werden. Die Metriken 32 können Code-Qualitätsmetriken, Test-Qualitätsmetriken und/oder die Anzahl von Tests umfassen. Bei erfolgreicher Bewertung wird als Ausgabe 33 der Programmcode und seine Qualität oder Güte ausgegeben. Dieser Bereich des Computersystems 20 kann als Qualitätsbewertungsbereich bezeichnet werden.

Basierend auf der Bewertung kann eine Güte berechnet werden. Wenn mehrere Ziel-Programmcodes erzeugt worden sind, können die Lösungen dem Nutzer nach der Güte geordnet bereitgestellt werden.

Die Bewertung des Programmcodes kann zum Beispiel anhand von Code-Qualitätsmetriken wie zum Beispiel der Länge des Quellcodes, der Anzahl der Schleifen und oder der Verzweigungstiefe, Test-Qualitätsmetriken wie zum Beispiel der Abdeckung (Branch coverage) und/oder der Anzahl von verfügbaren oder durchgeführten Tests vorgenommen werden.

Fig. 3 zeigt den Speicher-Sanitizer 28 in Detail sowie den Test-Harness 25 und den Programmcode 23 als Eingänge für den Speicher-Sanitizer 28.

Für das Überprüfen und Überwachen der Speicherleistung umfasst der Speicher-Sanitizer 28 die folgenden Teile. Ein (optionaler) Korpus 40 wird mit anfänglichen Testfällen aus den Code-Repositories (die übersetzt oder refaktorisiert werden) und/oder aus den bereitgestellten Tests und Test Harnesses gefüllt. Dazu ist der Korpus 40 mit dem Test-Harness 25 verbunden.

Eine Kompilierungs- und Instrumentierungseinheit 41 ist vorgesehen, um aus dem Programmcode 23 eine ausführbare Datei 43 zu erzeugen. Dazu erhält die Einheit 41 den Programmcode 23 als Eingang und ist für die Kompilierung und Instrumentierung mit dem Test-Harness 25 verbunden.

Ein Fuzzer 42 ist vorgesehen, Eingaben zu generieren und diese in die ausführbare Datei 43 zu injizieren. Für die Eingaben ist der Fuzzer 42 mit dem Korpus 40 und/oder dem Test-Harness 25 verbunden.

Eine Speicher-Metadaten Datenbank 44 ist zur Speicherung von Metadaten vorgesehen. Die Speicher-Metadaten Datenbank 44 wird mit Informationen aus der Kompilierungs- und Instrumentierungseinheit 41 erzeugt, beziehungsweise initial befüllt. Während der Laufzeit wird die Speicher-Metadaten Datenbank 44 mit den Laufzeitinformationen aus dem zugewiesenen und freigegebenen Speicher der ausführbaren Datei 43 gefüllt. Dazu ist die Speicher-Metadaten Datenbank 44 mit der Kompilierungs- und Instrumentierungseinheit 41 und der ausführbaren Datei 43 verbunden. In der Speicher-Metadaten Datenbank 44 können Metadaten aus dem zugewiesenen und freigegebenen Speicher aller verschiedenen Versionen der ausführbaren Datei 43 gespeichert werden, so dass das Speicherverhalten über verschiedene Versionen hinweg betrachtet werden kann.

Eine Überwachungseinheit 45 misst oder überwacht die Speicherleistung und optional Laufzeitinformationen, das Verhalten und/oder die Ausgabe der ausführbaren Datei. Dabei kann die Abdeckung des Codes während der Laufzeit überwacht werden, in der Regel in einer Grey-Box-Einstellung. Dies kann dann in der Überwachungseinheit 45 gespeichert werden. All dies wird an den Fuzzer 42 zurückgegeben, um bessere Testfälle zu erzeugen. Zusätzlich ist die Überwachungseinheit 45 mit der Speicher-Metadaten Datenbank 44 verbunden, um Informationen über Speicher-Metadaten zu erhalten und mit in die Überwachung einzubeziehen. Dies kann zum Beispiel Vergleiche von Speicherdaten wie Speicherleistung, Speicherbelegung etc. umfassen.

Fig. 4 zeigt schematisch ein Computersystem 20, in dem die Techniken der vorliegenden Offenbarung zur Verbesserung der Speicherzuweisung eingesetzt werden können. Das Computersystem 20 kann dem Computersystem 20 aus Fig. 2 entsprechen. Das Computersystem 20 ist dafür ausgelegt, das Verfahren 10 gemäß Fig. 1 und das Verfahren 50 gemäß Fig. 5 auszuführen, insbesondere ist das Computersystem 20 aus Fig. 3 dafür ausgelegt das Trainings-Verfahren 50 gemäß Fig. 5 auszuführen. Das Computersystem 20 kann in Hard- und/oder Software realisiert sein. Entsprechend kann das in Fig. 3 gezeigte System als Computerprogramm angesehen werden, das dazu ausgelegt ist, das Verfahren 10 gemäß Fig. 1 und das Verfahren 50 gemäß Fig. 5 auszuführen.

In Fig. 4 wird ein Fehlerbehandlungsmechanismus des Computersystems 20 dargestellt. Falls kein Programmcode 31 ohne Fehler generiert werden kann, führt das in dem Speicher-Sanitizer 28 zu einem Fehler. Entsprechend wird eine Meldung 34 zur Reduzierung des Vertrauens in die Übersetzung ausgegeben. Zudem wird in einem Fehlermodul 35 der Fehler sowie der zugehörige Programmcode 31 hinterlegt.

Aus dem Fehlermodul 35 wird als Information 36 der bisher beste Programmcode mit den noch existierenden Fehlern zu dem Sprachmodell 22 zurückgeführt, um damit einen besseren im Idealfall fehlerfreien Ziel-Programmcode zu generieren. Dies vermindert die Zuverlässigkeit und wird in der Qualitätsbestimmung berücksichtigt.

Optional kann sich dies nicht nur auf Fehler im Überprüfungsbereich beziehen, sondern analog auch auf Fehler im Qualitätsbewertungsbereich.

Fig. 5 ist ein Flussdiagramm, das ein Verfahren 50 zum Trainieren eines Sprachmodells illustriert. Das Sprachmodell ist eingerichtet zur automatisierten Generierung von Programmcode.

Zusammengefasst wird der durch das Sprachmodell erzeugte Code als Feedback an das Sprachmodell zurückgegeben, um eine neue Generation von Quellcode zu generieren. Die Idee ist, dass bereits passender (oder besserer) Code dann mit einer aktualisierten Eingabeaufforderung, die den neuen Code enthält, im Hinblick auf die Überwachungs- und Verhaltensausgabe feinabgestimmt werden kann. Wenn beispielsweise bereits guter Code nur an bestimmten Stellen Laufzeitprobleme aufweist, können diese Stellen in das Sprachmodell zurückgeführt werden.

In einem ersten Schritt des Verfahrens erfolgt ein Eingeben 51 des Ursprung-Programmcodes oder eines Source Codes in ein Sprachmodell und erzeugen eines Programmcodes. Das Sprachmodell kann bereits vortrainiert und gegebenenfalls auch schon fein abgestimmt sein. Alternativ kann auch mit einem neuen, untrainierten Sprachmodell gestartet werden. Das Trainieren basiert hier auf Reinforcement Learning. Das Trainieren geschieht in einer Trainingsumgebung zum Beispiel mit PPO (Proximal Policy Optimization).

Weiter erfolgt ein Verbessern 52 des Programmcodes des prädiktiven Ziel-Programmcodes mittels des Verfahrens 10 wie zuvor anhand von Fig. 1 beschrieben.

Dann erfolgt ein Erzeugen 53 einer Belohnung für das Sprachmodell, wobei die Belohnung auf dem Überwachen 14 der Speicherleistung und optional von Laufzeitinformationen, des Verhaltens und/oder der Ausgabe der ausführbaren Datei 43 und/oder den Metadaten basiert. So kann eine niedrige Bewertung erfolgen, wenn die Speicherleistung niedrig ist und/oder wenn viel Speicher belegt ist oder wenig Speicher freigegeben wird. Eine hohe Bewertung kann erfolgen, wenn die Speicherleistung hoch ist und/oder wenn wenig Speicher belegt ist oder viel Speicher freigegeben wird.

Schließlich erfolgt ein Aktualisieren 54 von Gewichten des Sprachmodells mit dem Wert der Belohnung. Das Resultat des Verfahrens ist ein Sprachmodell, das auf neuen ungelabelten Daten (hier zum Beispiel C-Code aus einer Motorsteuerung) besser trainiert ist, d.h. zuverlässigere Übersetzungen liefert.

Gemäß einer Ausführungsform umfasst das Verfahren weiterhin, dass die Belohnung approximiert wird durch Ausführung nur einer Teilmenge der Tests des automatisierten Prüfens. Dies erlaubt eine Beschleunigung des Trainings.

## Patentansprüche

1. Verfahren (10) zur Verbesserung der Speicherzuweisung von mittels eines Sprachmodells (22) generiertem Code, mit den Schritten:
- Bereitstellen (11) eines Programmcodes (23), der mittels eines Sprachmodells (22) generiert wurde,
wenn eine neue Version des Programmcode (23) verfügbar ist,
- Erzeugen (12) einer ausführbaren Datei (43) mittels Kompilierung und Instrumentierung durch einen Speicher-Sanitizer (28), wobei der Speicher-Sanitizer (28) bei dem Erzeugen (12) Instruktionen in die ausführbare Datei (43) einfügt,
- Ausführen (13) von Fuzzing durch einen Fuzzer (42), wobei der Fuzzer (42) Eingaben in die ausführbare Datei (43) injiziert,
- Überwachen (14) der Speicherleistung und optional von Laufzeitinformationen, des Verhaltens und/oder der Ausgabe der ausführbaren Datei (43),
- Speichern (15) von Metadaten erzeugt aus dem zugewiesenen und freigegebenen Speicher in einer Speicher-Metadaten Datenbank (44), wobei die Metadaten auf den Instruktionen basieren und während des Erzeugens (12) der ausführbaren Datei (43) und/oder während des Ausführens (13) von Fuzzing gespeichert werden;
- Ausgeben (16) des Programmcodes (23), wenn das Fuzzing keine Verschlechterung der Speicherleistung oder andere Fehler gefunden hat.

2. Verfahren (10) gemäß Anspruch 1, wobei die Instruktionen in eine Zwischendarstellung der ausführbaren Datei (43) eingefügt werden.

3. Verfahren (10) gemäß Anspruch 1 oder 2, wobei ein Korpus (40) mit Eingaben für den Fuzzer (42) bereitgestellt wird, der anfängliche Testfälle aus Code-Repositories des Programmcodes (23) und/oder aus bereitgestellten Tests und Test Harnesses enthält.

4. Verfahren (10) gemäß einem der Ansprüche 1 bis 3, wobei während oder nach dem Ausführen (13) von Fuzzing ein abnormales Beenden des Verfahrens ausgelöst wird, wenn die Speicherleistung schlechter ist als ältere Einträge aus der Speicher-Metadaten Datenbank (44).

5. Verfahren (10) gemäß einem der Ansprüche 1 bis 4, wobei für das Überwachen (14) die dem Fuzzing unterworfene ausführbare Datei (43) und die Speicher-Metadaten Datenbank (44) überwacht werden.

6. Verfahren (10) gemäß einem der Ansprüche 1 bis 5, wobei die Speicherleistung, Laufzeitinformationen, das Verhalten der ausführbaren Datei (43) und/oder die Ausgabe der ausführbaren Datei (43) an den Fuzzer (42) zurückgeführt wird.

7. Verfahren (10) gemäß einem der Ansprüche 1 bis 6, wobei der Programmcode (23) oder Teile des Programmcodes (23) unter Verwendung der Speicherleistung, von Laufzeitinformationen, des Verhaltens des Programmcodes (23) und/oder der Ausgabe des Programmcodes (23) aktualisiert wird und wobei der aktualisierte Programmcode optional als Eingabe für das Sprachmodell (22) zurückgeführt wird.

8. Verfahren (50) zum Trainieren eines Sprachmodells (22) eingerichtet zur automatisierten Generierung von Programmcode (23, 31), mit den Schritten:
- Eingeben (51) eines Source-Codes in ein Sprachmodell (22) und erzeugen eines Programmcodes (23),
- Verbessern (52) des Programmcodes (23) mit dem Verfahren (10) gemäß einem der Ansprüche 1 bis 7,
- Erzeugen (53) einer Belohnung für das Sprachmodell (22), wobei die Belohnung auf dem Überwachen (14) der Speicherleistung und optional von Laufzeitinformationen, des Verhaltens und/oder der Ausgabe der ausführbaren Datei (43) und/oder den Metadaten basiert,
- Aktualisieren (54) von Gewichten des Sprachmodells mit dem Wert der Belohnung.

9. Verfahren (50) gemäß Anspruch 8, wobei die Belohnung approximiert wird durch Ausführung nur einer Verifizierung.

10. Computersystem (20), dafür ausgelegt, das Verfahren (10; 50) gemäß einem der Ansprüche 1 bis 9 auszuführen.

11. Computerprogramm, das dazu ausgelegt ist, das Verfahren (10; 50) gemäß einem der Ansprüche 1 bis 9 auszuführen.

12. Computerlesbares Medium oder Signal, das das Computerprogramm gemäß Anspruch 11 speichert und/oder enthält.
